# EUROPÄISCHE PATENTSCHRIFT

(11) **EP 1 105 304 B1**
(45) Veröffentlichungstag und Bekanntmachung des Hinweises auf die Patenterteilung: **11.06.2003**
(21) Anmeldenummer: 99941624.1
(22) Anmeldetag: 14.08.1999
(51) Int. Cl.: B60T 1/00, F16H 63/48

(54) **PARKSPERRE FÜR AUTOMATISCHE GETRIEBE VON KRAFTFAHRZEUGEN**
PARKING LOCK FOR THE AUTOMATIC TRANSMISSION OF MOTOR VEHICLES
DISPOSITIF DE BLOCAGE DE STATIONNEMENT POUR BOITES DE VITESSES AUTOMATIQUES DE VEHICULES AUTOMOBILES

(30) Priorität: 20.08.1998 DE 19837832
(43) Veröffentlichungstag der Anmeldung: 13.06.2001
(73) Patentinhaber: ZF FRIEDRICHSHAFEN Aktiengesellschaft, 88038 Friedrichshafen (DE)
(72) Erfinder: HAUPT, Josef, D-88069 Tettnang (DE)
(86) Internationale Anmeldenummer: EP9905978
(87) Internationale Veröffentlichungsnummer: WO00010846

(56) Entgegenhaltungen:
- DE-A- 4 026 573
- DE-A- 4 127 991
- DE-C- 3 537 091
- DE-C- 4 317 257
- US-A- 4 576 261

## Beschreibung

Die Erfindung bezieht sich auf eine Parksperre für automatische Getriebe von Kraftfahrzeugen, bei denen der Abtrieb des Getriebes blockiert wird, indem eine Sperrklinke in ein Parksperrenrad eingreift und dieses somit verdrehgesichert ist.

Die DE 43 17 257 beschreibt eine Parksperre für automatische Getriebe von Kraftfahrzeugen, bei der eine Sperrklinke aus dem Parksperrenrad gezogen wird, indem ein Zylinder mit Drucköl befüllt wird und dessen Kolben, entgegen einer Federkraft, eine Verbindungsstange über ein Kulissenstück bewegt. Über manuelles Bewegen eines Handhebels über eine Wirkverbindung kann die Verbindungsstange mit der Sperrklinke im Kulissenstück bewegt, eingerastet und somit die Parksperre entriegelt werden. Indem die Kolbenstange über das linear bewegte Kulissenstück eine direkte Verbindung mit der Verbindungsstange der Sperrklinke hat und somit eine lineare Bewegung direkt auf die Verbindungsstange übertragen wird, muß die Wirkverbindung, welche somit ebenfalls eine lineare Bewegung ausführt, da sie im Fahrgastraum des Fahrzeugs endet, im Automatikgetriebe aufwendig abgedichtet werden. Soll die Parksperre hydraulisch entriegelt werden, wird die Sperrklinke aus dem Parksperrenrad gezogen, indem die Verbindungsstange eine lineare Bewegung ausführt, welche durch einen Bolzen, der in einer schräg verlaufenden Nut des Kulissenstückes geführt wird, zurückgezogen wird. Dadurch treten zwischen dem Bolzen und der schräg verlaufenden Nut erhebliche Reibungskräfte auf. Wird die Parksperre manuell notentriegelt und der Bolzen rastet in dem Kulissenstück ein, so kann diese Position wieder ausgerastet werden, indem der Kolben der Hydraulikeinheit mit Druck beaufschlagt wird und der Bolzen die Verrastung verlassen kann. In diesem Zustand besteht die Möglichkeit, daß der Bolzen auf die Gabelung der Nuten im Kulissenstück trifft und dabei abgeschert wird. Durch Verwendung eines Kulissenstückes besteht ebenfalls die Möglichkeit, daß Fahrstöße eine ungewollte Funktion der Parksperreneinrichtung hervorrufen, da ein linear gelagertes Kulissenstück ein Feder-Masse-System darstellt, welches auf lineare Kräfte reagiert.

Der vorliegenden Erfindung liegt die Aufgabe zugrunde, eine Parksperre für automatische Getriebe von Kraftfahrzeugen zu schaffen, welche sich durch hohe Funktionssicherheit, einfachen Aufbau, sichere Abdichtung und geringe Reibung auszeichnet.

Erfindungsgemäß wird diese Aufgabe durch die im kennzeichnenden Teil von Anspruch 1 bzw. 2 genannten Merkmale gelöst. Vorteilhafte Ausgestaltungen sind in den Unteransprüchen beschrieben.

Die bevorzugte Parksperre besteht aus einer Vorrichtung, welche mit einer Verbindungsstange mit einer Sperrklinke verbunden ist und von einer hydraulischen Betätigungseinrichtung, bestehend aus einem Kolben, einem Zylinder und einer Rückstellfeder, bewegt wird. Die Vorrichtung besteht aus zwei Scheiben, welche auf einer gemeinsamen Welle angeordnet sind, und durch Drehen der Scheiben Funktionen der Parksperre betätigt werden können. Eine erste Scheibe, hier Rastenscheibe genannt, hat eine erste, außermittig angebrachte Verbindung zu einer Verbindungsstange mit einer Sperrklinke und eine zweite, der ersten Verbindung gegenüberliegende, außermittig angeordnete Verbindung zu einer hydraulischen Betätigungseinrichtung. Wird die hydraulische Betätigungseinrichtung betätigt, so wird ausschließlich über Drehbewegung der Vorrichtung die Parksperre ver- bzw. entriegelt. Eine zweite Scheibe, hier Notentriegelungsscheibe genannt, hat über einen Zapfen, welcher sich in einer Nut in der Rastenscheibe bewegen kann, eine Verbindung zur Rastenscheibe und eine Verbindung über eine zentrale Welle, mit welcher die Notentriegelungsscheibe drehfest verbunden und auf welcher die Rastenscheibe drehbar gelagert ist, welche über eine Abdichtung im Gehäuse des Getriebes mit einer Wirkverbindung zur Notentriegelung außerhalb des Getriebes verbunden ist. Die Notentriegelungsscheibe läßt sich innerhalb zweier Anschläge drehen und wird automatisch in einer Position, in welcher die Parksperre über die Notentriegelung und somit dem Drehen der Notentriegelungsscheibe und über den Zapfen dem Drehen der Rastenscheibe entriegelt ist, durch eine Rastierung, vorzugsweise eine Feder, in dieser Position gehalten, bis diese Position durch Drehen der ersten Scheibe durch automatisches Entriegeln der Rastierung wieder in den Ausgangszustand zurückgedreht wird. Indem die Scheiben eine reine Drehbewegung ausführen, ist es möglich, die zentrale Welle der Scheiben im Gehäuse des Automatikgetriebes einfach zu lagern und indem die Welle durch das Gehäuse des Automatikgetriebes nach außen geführt ist, eine Wirkverbindung einfach anzubringen und die Welle im Gehäuse funktionssicher abzudichten. Indem keine Massen verwendet werden, welche linear zu bewegen sind, ist die Erfindung auch bei größeren Stoßbelastungen funktionssicher.

Weitere Merkmale sind den folgenden Funktionsbeschreibungen des Ausführungsbeispiels zu entnehmen.
Ein bevorzugtes Ausführungsbeispiel der Erfindung wird nachfolgend mit den zugehörigen Zeichnungen beschrieben.
Es zeigen:
- Fig. 1: eine Parksperre, bei der das Parksperrenrad durch die Parkklinke blockiert ist;
- Fig. 2: eine Parksperre, welche manuell entriegelt wurde, so daß die Parkklinke das Parksperrenrad freigibt;
- Fig. 3: eine Parksperre, welche hydraulisch entriegelt wurde, so daß die Parkklinke das Parksperrenrad freigibt und
- Fig. 4: eine Parksperre der zuvor beschriebenen Art in der Schnitt-Darstellung.

### Fig. 1:

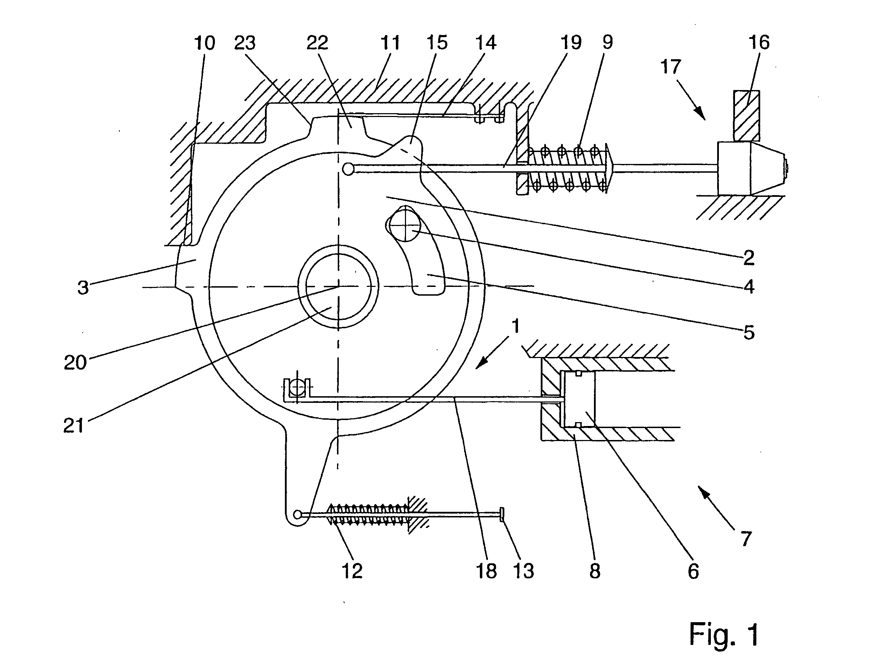

Innerhalb eines Getriebegehäuses 11 eines automatischen Getriebes befindet sich eine Parksperre, welche aus einer Vorrichtung 1, einer Betätigungseinrichtung 7, einer manuellen Betätigungseinrichtung 13 und einer Verriegelung 17 besteht. Wird vom Automatikgetriebe kein Systemdruck erzeugt, ist die Betätigungseinrichtung 7 drucklos und der Kolben 6 wird über die Feder 9 bis zu seinem Anschlag im Zylinder 8 oder dem Anschlag der Aussparung 5 am Zapfen 4 bewegt. Der Kolben 6 ist über eine Verbindung 18 über eine Rastenscheibe 2 über eine Verbindung 19 mit der Verriegelung 17 verbunden, welche aus einem Konus und einer Parkklinke 16 sowie einem nicht dargestellten Parksperrenrad besteht. Indem der Kolben 6 sich zu seinem Anschlag im Zylinder 8 bewegt, wird die Rastenscheibe 2 über die Verbindung 18 um ihre zentrale Achse 20 gedreht und bewegt die Verbindung 19 mit Hilfe der Federkraft der Feder 9, so daß in der Verriegelung 17 die Parkklinke 16 in das Parksperrenrad eingreift und das Parksperrenrad blockiert. Die Rastenscheibe 2 weist eine Aussparung 5 auf, in welcher sich der Zapfen 4, der auf der Notentriegelungsscheibe 3 befestigt ist, befindet. Die Notentriegelungsscheibe 3 wird über die Federkraft der Feder 12 mit dem Anschlag 10 an das Getriebegehäuse 11 gedrückt. Die Kraft der manuellen Betätigungseinrichtung und der Feder 12 wird über die Welle 21 auf die Notentriegelungsscheibe 3 aufgebracht. In den Fig. 1, 2 und 3 ist zum besseren Verständnis die manuelle Betätigungseinrichtung über einen Nocken mit der Notentriegelungsscheibe 3 verbunden. Da der Anschlag 10 der Notentriegelungsscheibe 3 am Gehäuse 11 ansteht, wird die Rastenscheibe 2 so weit verdreht, bis die Aussparung 5 am Zapfen 4 oder der Kolben 6 im Zylinder 8 ansteht. Die Rastierung 14, welche aus einer Rastenfeder und einer Erhöhung 22 besteht, befindet sich in ausgerastetem Zustand auf der Erhöhung 22.

### Fig. 2:

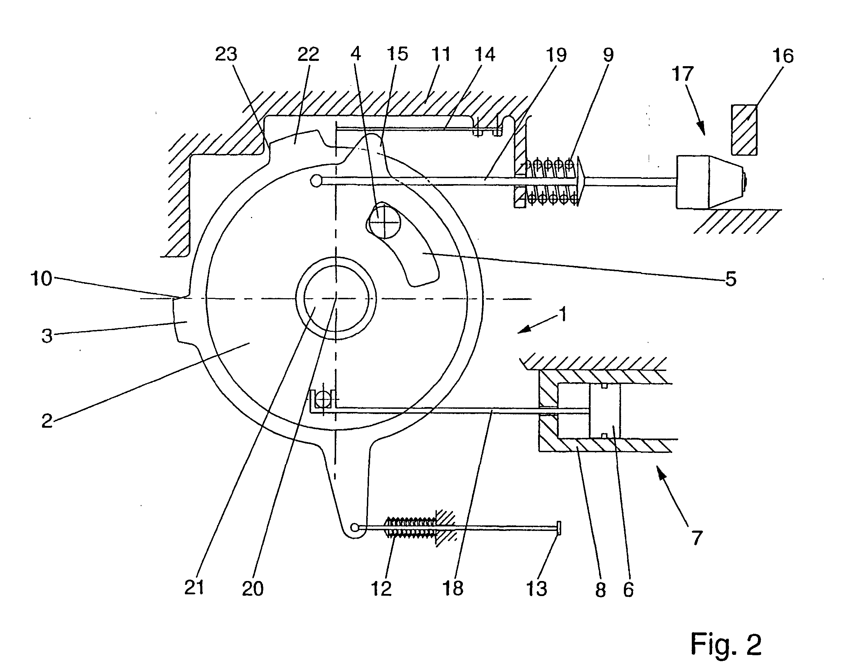

In Fig. 2 ist der Zustand beschrieben, in dem die Parksperre manuell entriegelt ist. Dies ist notwendig, wenn das Fahrzeug abgeschleppt werden muß. Indem die manuelle Betätigungseinrichtung 13 betätigt wird, dreht sich die Notentriegelungsscheibe 3, bis der Anschlag 23 am Gehäuse 11 ansteht. Dabei wird die Feder 12 gespannt. Der Zapfen 4, welcher in der Notentriegelungsscheibe 3 befestigt ist, liegt an der Aussparung 5 der Rastenscheibe 2 an und dreht die Rastenscheibe 2, bis die Verbindung 19 die Verriegelung 17 entriegelt. Hat die Notentriegelungsscheibe 3 mit ihrem Anschlag 23 das Gehäuse 11 erreicht, so ist die Parksperre entriegelt und die Rastierung 14 rastet nach der Erhöhung 22 in die Notentriegelungsscheibe 3 ein. In dieser Stellung kann das Fahrzeug abgeschleppt werden.

### Fig. 3:

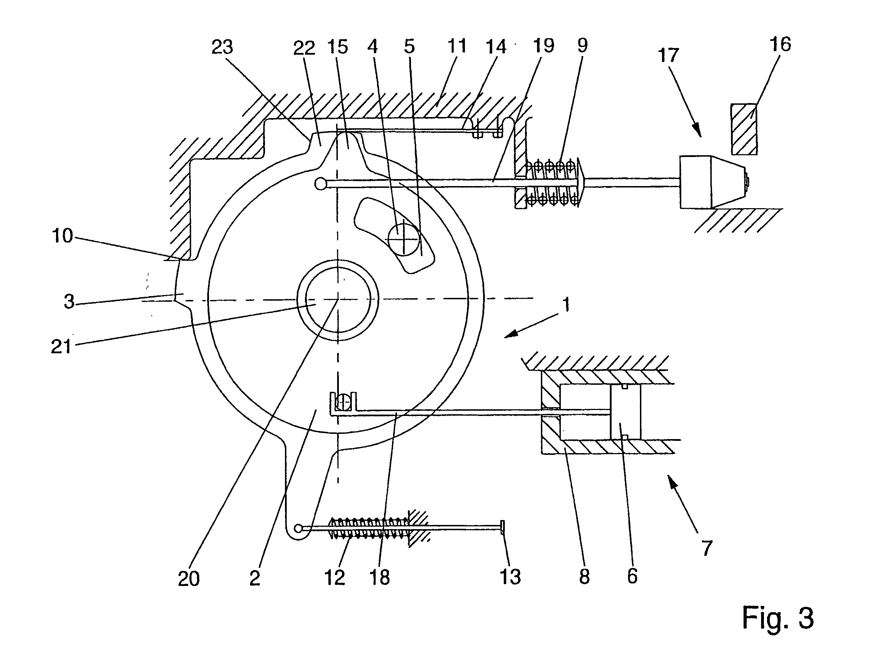

Fig. 3 zeigt eine Stellung der Parksperre, welche durch Aufbringen einer hydraulischen Kraft die Parksperre entriegelt. Hierzu wird ein hydraulischer Druck in den Zylinder 8 der Betätigungseinrichtung 7 gegeben. Dieser wirkt auf den Kolben 6 und bewegt den Kolben und die Verbindung 18. Dadurch wird die Rastenscheibe 2 gedreht und der Nocken 15 hebt die Rastierung 14 an, so daß sich die Notentriegelungsscheibe 3 mit der Erhöhung 22 unter die Rastierung 14 schieben kann, bis der Anschlag 10 am Gehäuse 11 zur Anlage kommt. Somit wird die Notentriegelungsscheibe 3 und die manuelle Betätigungseinrichtung 13 über die Federkraft der Feder 12 in ihren Ursprungszustand zurückgedreht. Gleichzeitig wird durch Drehen der Rastenscheibe 2 die Verbindung 19 bewegt, so daß die Verriegelung 17, entgegen der Federkraft 9, entriegelt wird. Dadurch wird durch Aufbringen eines hydraulischen Druckes in die Betätigungseinrichtung 7 die Rastierung 14 der Notentriegelungseinrichtung automatisch zurückgesetzt. Die Rastenfeder kann an ihrem freien Ende eine Rolle aufweisen, welche es ermöglicht, daß die Rastierung leichter vom Nokken 15 ausgerastet werden kann.

### Fig. 4:

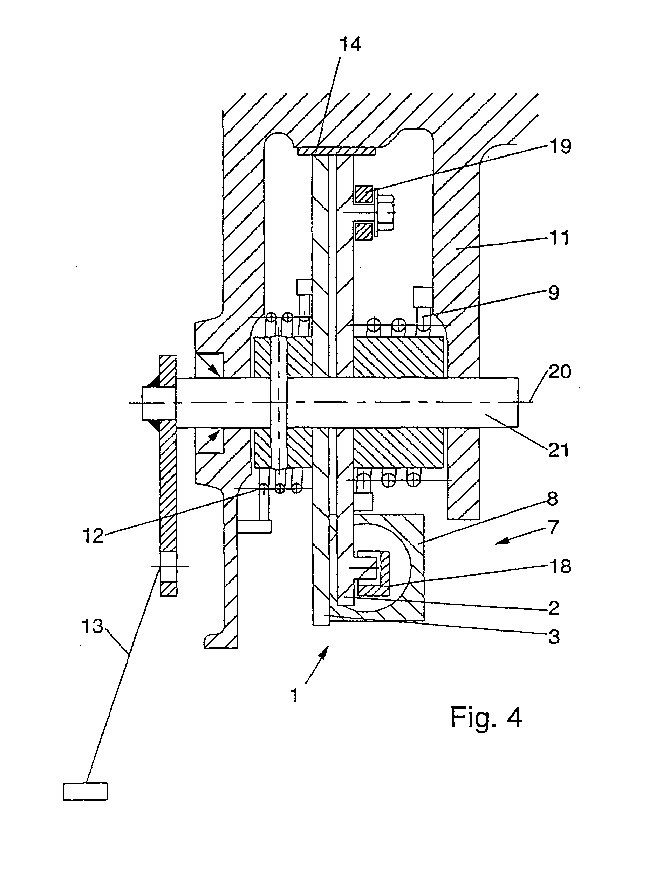

Fig. 4 zeigt einen Schnitt durch die Vorrichtung, welcher im besonderen die einfache Anbringung der manuellen Betätigungseinrichtung 13 über die Welle 21 an die Notentriegelungsscheibe 3 zeigt. Durch diesen konstruktiven Aufbau ist eine einfache und funktionssichere Abdichtung der Entriegelungsvorrichtung 1 gegeben. Die Welle 21 und somit die Rastenscheibe 2 und die Notentriegelungsscheibe 3 können sich um die zentrale Achse 20 drehen und sind im Gehäuse 11 gelagert. Die Notentriegelungsscheibe 3 ist vorzugsweise über eine Stiftverbindung mit der Welle 21 verbunden. Die Rastenscheibe 2 ist auf der Welle 21 drehbar gelagert.

### Bezugszeichen

- 1: Vorrichtung
- 2: Rastenscheibe
- 3: Notentriegelungsscheibe
- 4: Zapfen
- 5: Aussparung
- 6: Kolben
- 7: Betätigungseinrichtung
- 8: Zylinder
- 9: Feder
- 10: Anschlag
- 11: Gehäuse
- 12: Feder
- 13: manuelle Betätigungseinrichtung
- 14: Rastierung
- 15: Nocken
- 16: Parkklinke
- 17: Verriegelung
- 18: Verbindung
- 19: Verbindung
- 20: zentrale Achse
- 21: Welle
- 22: Erhöhung
- 23: Anschlag

## Patentansprüche

1. Parksperre, insbesondere für automatische Getriebe von Kraftfahrzeugen, die aufgrund eines vom Fahrer über eine Bedieneinrichtung ausgelösten Betätigungssignals das automatische Getriebe blockiert bzw. freigibt, indem eine Parkklinke (16), welche über eine Vorrichtung (1) mit Scheiben (2, 3) und mit einer Rastierung (14) in Verbindung mit einer Betätigungseinrichtung (7), bestehend aus einem Kolben (6), einem Zylinder (8) und einer Rückstellfeder (9), bewegt wird, wobei die Parkklinke (16) manuell über eine Wirkverbindung von einem Fahrzeugraum aus oder hydraulisch über die Betätigungseinrichtung (7) bewegt werden kann, **dadurch gekennzeichnet, daß** durch Drehen der Vorrichtung (1) um deren zentrale Achse (20) durch Druckbeaufschlagung der Betätigungseinrichtung (7) der Parkklinke (16) ausgerastet und dabei die Rastierung (14) in einen offenen Zustand gebracht und durch Drucklosschalten der Betätigungseinrichtung (7) die Vorrichtung (1) in die entgegengesetzte Richtung um ihre zentrale Achse (20) gedreht wird und dabei die Parkklinke (16) einrastet.

2. Parksperre, insbesondere für automatische Getriebe von Kraftfahrzeugen, die aufgrund eines vom Fahrer über eine Bedieneinrichtung ausgelösten Betätigungssignals das automatische Getriebe blockiert bzw. freigibt, indem eine Parkklinke (16), welche über eine Vorrichtung (1) mit einer Rastierung (14) in Verbindung mit einer Betätigungseinrichtung (7), bestehend aus einem Kolben (6), einem Zylinder (8) und einer Rückstellfeder (9), bewegt wird, wobei die Parkklinke (16) manuell von einer Betätigungseinrichtung (13) über eine Wirkverbindung von einem Fahrzeugraum aus oder hydraulisch über die Betätigungseinrichtung (7) bewegt werden kann, **dadurch gekennzeichnet, daß** durch manuelles Betätigen der Betätigungseinrichtung (13) von einem Fahrzeugraum über die Wirkverbindung die Vorrichtung (1) um deren zentrale Achse (20) gedreht wird und dabei die Parkklinke (16) das automatische Getriebe freigeben kann und die Rastierung (14) betätigt wird, welche die Parkklinke (16) im ausgerasteten Zustand hält.

3. Parksperre nach den Ansprüchen 1 und 2, **dadurch gekennzeichnet, daß** die Vorrichtung (1) aus zwei Scheiben (2, 3) besteht, welche auf einer gemeinsamen zentralen Achse (20) angeordnet und über einen Zapfen (4) verbunden sind, wobei der Zapfen (4) mit einer Aussparung (5) einen Verdrehweg der Scheiben zueinander begrenzt.

4. Parksperre nach einem der vorhergehenden Ansprüche, **dadurch gekennzeichnet, daß** der Verdrehweg der Scheiben (2, 3) im Gehäuse (11) des automatischen Getriebes durch Anschlagflächen (10, 23), begrenzt ist.

## Claims

1. Parking lock, particularly for automatic gearboxes of motor vehicles, which locks or releases the automatic gearbox on the basis of an actuating signal triggered by the driver via an operating apparatus, through the fact that a parking pawl (16), which is connected via a device (1) to discs (2, 3) and to a detent unit (14), is moved with the aid of an actuating apparatus (7) consisting of a piston (6), a cylinder (8) and a restoring spring (9), it being possible to move the said parking pawl (16) manually, from a compartment of the vehicle, via an operative connection, or hydraulically via the said actuating apparatus (7),
**characterised in that**
the parking pawl (16) is disengaged, and the detent unit (14) thereby brought into an open condition, by rotation of the device (1) about its central axis (20) as a result of pressurisation of the actuating apparatus (7), and the said device (1) is rotated in the opposite direction about its central axis (20), and the parking pawl (16) thereby engaged, by switching of the actuating apparatus (7) into the pressure-less condition.

2. Parking lock, particularly for automatic gearboxes of motor vehicles, which locks or releases the automatic gearbox on the basis of an actuating signal triggered by the driver via an operating apparatus, through the fact that a parking pawl (16), which is connected via a device (1) to a detent unit (14), is moved with the aid of an actuating apparatus (7) consisting of a piston (6), a cylinder (8) and a restoring spring (9), it being possible to move the said parking pawl (16) manually by an actuating apparatus (13), from a compartment of the vehicle, via an operative connection, or hydraulically via the said actuating apparatus (7),
**characterised in that**
the device (1) is rotated about its central axis (20) by manual actuation of the actuating apparatus (13), from a compartment of the vehicle, via the said operative connection, and the parking pawl (16) is thereby able to release the automatic gearbox and the detent unit (14), which keeps the parking pawl (16) in the disengaged condition, is actuated.

3. Parking lock according to claims 1 and 2,
**characterised in that**
the device (1) consists of two discs (2, 3) which are disposed on a common central axis (20) and connected via a peg (4), the said peg (4) limiting, with the aid of a clearance (5), the rotational travel of the said discs in relation to one another.

4. Parking lock according to one of the preceding claims,
**characterised in that**
the rotational travel of the discs (2, 3) within the housing (11) of the automatic gearbox is limited by stop faces (10, 23).

## Revendications

1. Blocage de stationnement, en particulier pour boîtes de vitesses automatiques de véhicules automobiles, qui bloque ou débloque la boîte de vitesses automatique sous l'effet d'un signal d'actionnement déclenché par le conducteur par l'intermédiaire d'un dispositif de commande, par le fait qu'un cliquet de stationnement (16), qui est relié par l'intermédiaire d'un dispositif (1) comportant des disques (2, 3) et un encliquetage (14), à un dispositif d'actionnement (7) composé d'un piston (6), d'un cylindre (8) et d'un ressort de rappel (9), est déplacé, le cliquet de stationnement (16) pouvant être déplacé manuellement, par l'intermédiaire d'une liaison effective, à partir d'un espace du véhicule ou, par voie hydraulique, par l'intermédiaire du dispositif d'actionnement (7), **caractérisé en ce que**, par rotation du dispositif (1) autour de son axe central (20) réalisée par une charge de traction du dispositif d'actionnement (7), le cliquet de stationnement (16) est décliqueté et, dans cette action, l'encliquetage (14) est placé dans un état ouvert et, par la mise hors pression du dispositif d'actionnement (7), le dispositif (1) est tourné dans le sens inverse autour de son axe central (20) et, dans cette action, encliquette le cliquet de stationnement (16).

2. Blocage de stationnement, en particulier pour boîtes de vitesses automatiques de véhicules automobiles, qui bloque ou débloque la boîte de vitesses automatique sous l'effet d'un signal d'actionnement déclenché par le conducteur par l'intermédiaire d'un dispositif de commande par le fait qu'un cliquet de stationnement (16), qui est relié par l'intermédiaire d'un dispositif (1) comportant un encliquetage (14) à un dispositif d'actionnement (7), composé d'un piston (6), d'un cylindre (8) et d'un ressort de rappel (9), est déplacé, le cliquet de stationnement (16) pouvant être déplacé manuellement par un dispositif d'actionnement (13), par l'intermédiaire d'une liaison effective, à partir d'un espace du véhicule ou, par voie hydraulique, par l'intermédiaire du dispositif d'actionnement (7), **caractérisé en ce que**, par actionnement manuel du dispositif d'actionnement (13), à partir d'un espace du véhicule, et par l'intermédiaire de la liaison effective, le dispositif (1) est tourné autour de son axe central (20) et, dans cette action, le cliquet de stationnement (16) peut libérer la boîte de vitesses automatique et l'encliquetage (14) est actionné, lequel maintient le cliquet de stationnement (16) à l'état décliqueté.

3. Blocage de stationnement selon les revendications 1 et 2, **caractérisé en ce que** le dispositif (1) est composé de deux disques (2, 3) qui sont disposés sur un axe central commun (20) et reliés par l'intermédiaire d'un doigt (4), le doigt (4) limitant la course de rotation mutuelle des disques en coopérant avec un évidement (5)

4. Blocage de stationnement selon l'une des revendications précédentes, **caractérisé en ce que** la course de rotation mutuelle des disques (2, 3) dans le carter (11) de la boîte de vitesses automatique est limitée par des surfaces de butée (10, 23).
